# EUROPEAN PATENT APPLICATION

(11) **EP 2 852 260 A1**
(43) Date of publication of application: **25.03.2015**
(21) Application number: 14157922.7
(22) Date of filing: 05.03.2014
(51) Int. Cl.: H05B 37/02

(54) **Lighting control system**

(30) Priority: 20.09.2013 JP 2013196133
(71) Applicant: Toshiba Lighting & Technology Corporation, Yokosuka-shi Kanagawa 237-8510 (JP)
(72) Inventor: Takahashi, Junko, Kanagawa, 237-8510 (JP); Takahashi, Kenji, Kanagawa, 237-8510 (JP); Nishigaki, Hidenori, Kanagawa, 237-8510 (JP); Yamamoto, Hisashi, Kanagawa, 237-8510 (JP)
(74) Representative: Willquist, Sofia Ellinor

(57) **Abstract**

A lighting control system (1; 2; 3) includes a plurality of luminaires (20A, 20B, 20C) and a control device (10; 10A; 10B). The plurality of luminaires (20A, 20B, 20C) illuminate a predetermined space. The control device (10; 10A; 10B) executes first control for controlling a dimming degree of the luminaire arranged in a peripheral area in the periphery of a center area among the plurality of luminaires to be darker than the luminaire arranged in the center area and lighting the luminaires in the center area and the peripheral area and second control for controlling a dimming degree, according to predetermined conditions, of the luminaire arranged in a wall area, which is a position for illuminating a wall surface, among the plurality of luminaires to be brighter than during the first control.

## Description

### FIELD

Embodiments described herein relate to a lighting control system.

### BACKGROUND

In recent years, according to the appearance of LED (Light Emitting Diode) lighting and the like, it is possible to realize lighting control finer than that in the past. The development of techniques for comprehensively controlling home electronic appliances such as a smart house is actively performed.

For example, concerning a luminaire, there is known a technique for flexibly controlling a plurality of lighting lamps arranged in a predetermined relation and each including a plurality of LEDs. In the technique, a light emitting form of the plurality of LEDs included in one lighting lamp is varied somewhere in the lighting lamp and a mutual relation among the plurality of lighting lamps is determined such that, in portions where the plurality of lighting lamps are connected to one another, the LEDs of different lighting lamps have a common light emitting form to flexibly realize separation of a lit portion and an extinguished portion and division of gradations.

However, in a lighting system in the past, a method of controlling gradations taking into account subjective brightness felt by a person in a room is not proposed.

### BRIEF DESCRIPTION OF THE DRAWINGS

FIG. 1 is a diagram showing an example of a lighting control system according to a first embodiment;
FIG. 2 is a diagram showing an example of the configuration of a control device according to the first embodiment;
FIG. 3A is a diagram for explaining a relation between a center area and a peripheral area;
FIG. 3B is a diagram for explaining a relation among the center area, the peripheral area, and a wall area;
FIG. 4 is a diagram showing an example of the configuration of information stored in a gradation-control-condition storing unit according to the first embodiment;
FIG. 5 is a diagram showing an example of the configuration of information stored in a wall-control-condition storing unit according to the first embodiment;
FIG. 6 is a flowchart for explaining an example of a flow of lighting control processing according to the first embodiment;
FIG. 7 is a diagram for explaining an example of the configuration of a control device according to a second embodiment;
FIG. 8 is a diagram for explaining wall control in the second embodiment;
FIG. 9 is a diagram showing an example of the configuration of information stored in a wall-control-condition storing unit according to the second embodiment;
FIG. 10 is a flowchart for explaining an example of a flow of lighting control processing according to the second embodiment;
FIG. 11 is a diagram showing an example of the configuration of a control device according to a third embodiment;
FIG. 12 is a diagram showing an example of the configuration of information stored in a power-consumption storing unit according to the third embodiment;
FIG. 13 is a diagram showing an example of the configuration of information stored in a control-pattern storing unit according to the third embodiment;
FIG. 14A is a diagram showing an example of information displayed on an information processing device in a lighting control system according to the third embodiment;
FIG. 14B is a diagram showing another example of information displayed on the information processing device in the lighting control system according to the third embodiment;
FIG. 15A is a diagram for explaining a modification of gradation control;
FIG. 15B is another diagram for explaining the modification;
FIG. 15C is still another diagram for explaining the modification;
FIG. 15D is still another diagram for explaining the modification;
FIG. 15E is still another diagram for explaining the modification;
FIG. 15F is still another diagram for explaining the modification; and
FIG. 15G is still another diagram for explaining the modification.

### DETAILED DESCRIPTION

In general, according to one embodiment, there is provided a lighting control system including: a plurality of luminaires; and a control device. The plurality of luminaires illuminate a predetermined space. The control device executes first control for controlling a dimming degree of the luminaire arranged in a peripheral area in the periphery of a center area among the plurality of luminaires to be darker than the luminaire arranged in the center area and lighting the luminaires in the center area and the peripheral area and second control for controlling a dimming degree, according to predetermined conditions, of the luminaire arranged in a wall area, which is a position for illuminating a wall surface, among the plurality of luminaires to be brighter than during the first control.

The lighting control system according to the embodiment may further include a detecting device configured to detect a person in the predetermined space. The control device may determine the positions of the center area and the peripheral area according to the position of the person detected by the detecting device.

The control device included in the lighting control system according to the embodiment may execute the second control when the luminaire in the peripheral area is within a predetermined distance from the wall surface or when the luminaire in the peripheral area is the luminaire specified in advance.

The control device included in the lighting control system according to the embodiment may, when the second control is executed, light the luminaire in the center area at a dimming degree same as the dimming degree during the first control and light the luminaire in the peripheral area at a dimming degree lower than the dimming degree during the first control.

The detecting device included in the lighting control system according to the embodiment may further detect the direction of the person in the predetermined space. The control device may execute the second control for controlling a dimming degree of the luminaire in the wall area present in the forward direction of the person detected by the detecting device among the plurality of luminaires to be brighter than during the first control.

The control device included in the lighting control system according to the embodiment may dim the luminaire arranged in the wall area to brightness corresponding to the distance between the person and the wall surface.

The lighting control system according to the embodiment may further include: a calculating unit configured to calculate power consumption consumed when control is executed on the basis of a control pattern for executing the first control and the second control; and a display generating unit configured to display the power consumption calculated by the calculating unit and the control pattern in association with each other.

In the lighting control system according to the embodiment, the display generating unit may further display a lighting effect realized by the control pattern in association with the control pattern.

Embodiments are explained in detail below with reference to the drawings. In the embodiments, components having the same functions are denoted by the same reference numerals and signs, and redundant explanation of the components is omitted.

### First Embodiment

A lighting control system according to a first embodiment includes a plurality of luminaires arranged on, for example, a ceiling surface in a room. Areas in which the luminaires are arranged include a center area where the luminaires are lit brightest when gradation control is executed and a peripheral area located in the periphery of the center area. In the peripheral area, the luminaires are lit at illuminance lower than the illuminance in the center area. In the following explanation, the center area and the peripheral area are collectively referred to as gradation control area as well.

Gradation control is lighting control for lighting luminaires, which illuminate a predetermined space, while varying a dimming degree of the luminaires. For example, in the case of lighting in an office, a place where a person is present is detected and then a luminaire that directly illuminates the place where the person is present, for example, a luminaire that illuminates a desk is lit at a dimming degree of 100%. Then, a luminaire in the periphery that does not directly illuminate the desk but illuminates the periphery of the desk is lit at a dimming degree of 60%. In this way, not only the luminaire at least necessary for the person to perform work is lit but also the luminaire in the periphery is lit at the lower dimming degree. Consequently, it is possible to increase brightness felt by the person, reduce loneliness and the like, and improve comfortableness.

The lighting control system according to the first embodiment further executes wall control in the gradation control. The wall control is control for, when the luminaires in the peripheral area satisfy predetermined conditions, even if the luminaires in a wall area extending along a wall surface are the luminaires outside the gradation control area, lighting or dimming the luminaires in the wall area to be brighter than during normal gradation control. The wall area indicates an area adjacent to a wall partitioning a space illuminated by the lighting control system or an area extending along the wall.

For example, in the wall control, if the distance between the luminaire arranged in the peripheral area and the wall surface is within a predetermined value, the luminaire in the wall area between the peripheral area and the wall surface is lit bright or a dimming degree is controlled to be higher. For example, in the wall control, if the luminaire arranged in the peripheral area is the luminaire designated in advance, the luminaire in the wall area between the peripheral area and the wall surface is lit bright or a dimming degree is controlled to be higher.

For example, in the gradation control, it is assumed that the luminaires in the center area are set to be lit at a dimming degree of 100% and the luminaires in the peripheral area are set to be lit at a dimming degree of 60%. Further, it is assumed that, during the gradation control, the luminaires outside the gradation control area are set to be lit at a dimming degree of 30%. In this case, as the wall control, if the peripheral area is present within a predetermined distance, for example, three meters from the wall surface, the dimming degree of the luminaires in the wall area between the peripheral area and the wall surface is increased to 60%.

When the gradation control area is present near the wall surface, if the dimming degree of the luminaires present along the wall surface is increased, an amount of illumination light reflected from the wall surface increases. Therefore, brightness felt by the person increases more than brightness obtained by increasing the dimming degree of the luminaires far from the wall surface. The lighting control system according to the first embodiment improves comfortableness of lighting by the gradation control using the reflected light from the wall surface.

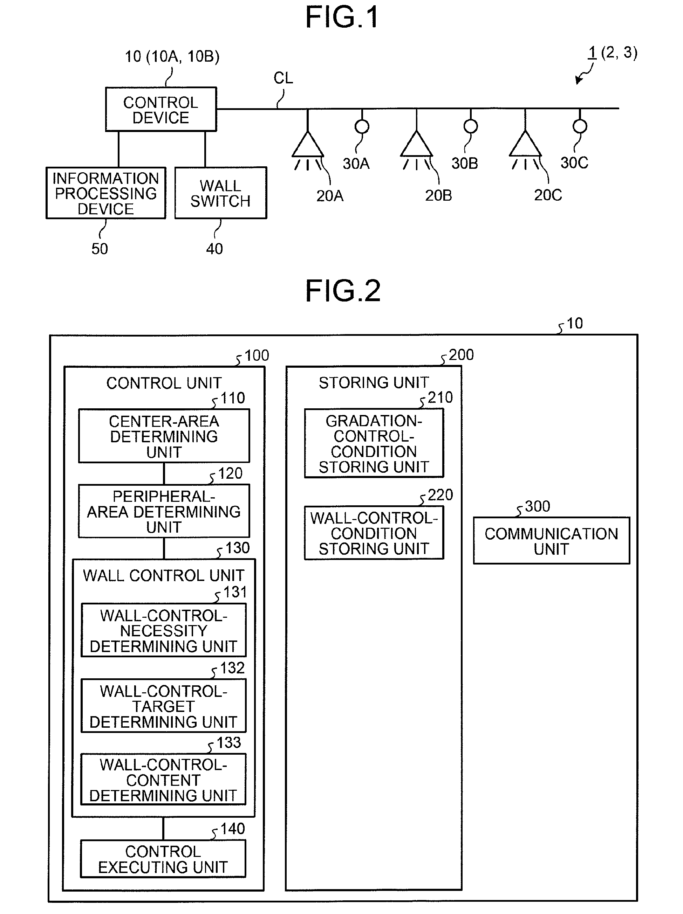

The lighting control system according to the first embodiment is explained in detail below. FIG. 1 is a diagram showing an example of the configuration of the lighting control system according to the first embodiment. The example of the configuration of the lighting control system according to the first embodiment is explained with reference to FIG. 1.

### Example of the configuration of a lighting control system 1

A lighting control system 1 according to the first embodiment shown in FIG. 1 includes a control device 10, luminaires 20A, 20B, and 20C, and sensors 30A, 30B, and 30C. The control device 10 is connected to the luminaires 20A, 20B, and 20C and the sensors 30A, 30B, and 30C via communication line CL.

The control device 10 is further connected to a wall switch 40 and an information processing device 50.

The control device 10 controls lighting, extinguishing, a dimming degree, and the like of the luminaires 20A, 20B, and 20C according to control of, for example, ON and OFF of the wall switch 40. In this embodiment, the control device 10 comprehensively controls the lighting, the extinguishing, the dimming degree, and the like of the luminaires 20A, 20B, and 20C. However, it is also possible that a part of functions of the control device 10 is imparted to the luminaires 20A, 20B, and 20C and the luminaires autonomously perform the control of the lighting, the extinguishing, the dimming degree, and the like.

The control device 10 is detachably attachable to the information processing device 50. A user connects the information processing device 50 to the control device 10 and accesses the control device 10 from the information processing device 50. The user can execute a setting input and a change of information stored in the control device 10 via the information processing device 50.

The luminaires 20A, 20B, and 20C are lighting lamps that illuminate a predetermined range. The luminaires 20A, 20B, and 20C are not particularly limited as long as the luminaires can change a lighting state and a dimming degree according to a signal received from the control device 10. For example, an arbitrary luminaire such as an LED, an incandescent lamp, or a fluorescent lamp can be used as the luminaires 20A, 20B, and 20C. When the luminaires 20A, 20B, and 20C autonomously control their states independently from the control device 10, control units and storing units may be provided in the respective luminaires.

The sensors 30A, 30B, and 30C detect a person in a space illuminated by the luminaires 20A, 20B, and 20C. For example, if the luminaires 20A, 20B, and 20C are arranged in an office, the sensors 30A, 30B, and 30C detect a person present in the office and transmit position information of the person to the control device 10. The sensors 30A, 30B, and 30C are not particularly limited as long as the sensors can detect the presence of a person. For example, an arbitrary detecting device such as an infrared sensor, a human sensor, or an image sensor can be used as the sensors 30A, 30B, and 30C.

In FIG. 1, the three luminaires 20A, 20B, and 20C and the three sensors 30A, 30B, and 30C are shown. However, the numbers of luminaires and sensors are not particularly limited. An arbitrary number of luminaires can be arranged as long as the luminaires can illuminate the predetermined space and can perform the gradation control and the wall control. An arbitrary number of sensors can be arranged as long as the sensors can detect a person in the predetermined space.

The wall switch 40 is a switch used by the user to perform control of lighting, extinguishing, a dimming degree, and the like of the luminaires. The wall switch 40 may be arranged in an arbitrary place as long as the user can easily operate the wall switch 40. The wall switch 40 is connected to the control device 10 and transmits ON and OFF signals to the control device 10.

It is assumed that necessity of execution of the gradation control is set on the control device 10 side in advance and cannot be instructed from the wall switch 40. However, even if the necessity of execution of the gradation control is set on the control device 10 side in advance, the setting may be disabled and enabled via a dedicated button for designating the necessity of the gradation control provided in the wall switch 40.

The information processing device 50 is an information terminal such as a general-purpose computer that can be generally acquired. For example, a personal computer (PC), a smart phone, a tablet computer, or the like can be used as the information processing device 50. The user connects the information processing device 50 to the control device 10 as appropriate and executes a setting input and a change of information.

### Configuration example of the control device 10

FIG. 2 is a diagram showing an example of the configuration of the control device 10 according to the first embodiment. The example of the configuration of the control device 10 is explained with reference to FIG. 2.

The control device 10 includes a control unit 100, a storing unit 200, and a communication unit 300. The control unit 100 controls processing in the control device 10. The storing unit 200 stores information used for processing in the control device 10. The communication unit 300 relays communication between the control device 10 and the luminaires 20A, 20B, 20C, the sensors 30A, 30B, and 30C, the wall switch 40, the information processing device 50, and the like.

The control unit 100 includes a center-area determining unit 110, a peripheral-area determining unit 120, a wall control unit 130, and a control executing unit 140.

The center-area determining unit 110 determines a center area on the basis of information received from the sensors 30A, 30B, and 30C via the communication unit 300. For example, it is assumed that the sensor 30A detects that a person is present under a luminaire specified by a lighting ID (Identifier) "53". The sensor 30A transmits information concerning the position of the detected person to the control device 10. The center-area determining unit 110 determines on the basis of the received information that the person is present under the luminaire specified by the lighting ID "53" and specifies four luminaires including the luminaire with the lighting ID "53" as luminaires in the center area.

At this point, specifically, the center-area determining unit 110 acquires, for example, information concerning a coordinate where the person is located and selects the four luminaires centering on a position indicated by the coordinate. The center-area determining unit 110 may be configured to determine a combination of four luminaires selectable as the center area and store the combination in the storing unit 200 in advance such that the combination of luminaires selected as the center area is automatically determined. For example, if a person is detected under a luminaire specified by a lighting ID "66", luminaires with lighting IDs "66, 67, 76, and 77" are automatically selected as the center area.

In this embodiment, as an example, it is assumed that the center area includes four luminaires and the peripheral area includes twelve luminaires around the center area. However, the numbers of luminaires in the center area and the peripheral area may be changed according to a characteristic of a space to which the lighting control system is applied and a form of arrangement of luminaires.

The peripheral-area determining unit 120 receives information concerning the luminaires in the center area determined by the center-area determining unit 110 and determines luminaires included in the peripheral area. In this embodiment, the peripheral-area determining unit 120 determines twelve luminaires as the peripheral area.

The wall control unit 130 receives information concerning the peripheral area determined by the peripheral-area determining unit 120, determines whether the wall control is executed and, if the wall control is executed, which luminaire is a target of the wall control and what is content of the wall control and sends information to the control executing unit 140.

The wall control unit 130 includes a wall-control-necessity determining unit 131, a wall-control-target determining unit 132, and a wall-control-content determining unit 133. The wall-control-necessity determining unit 131 determines whether the peripheral area determined by the peripheral-area determining unit 120 is within a predetermined distance from a wall surface. The wall-control-necessity determining unit 131 determines whether a luminaire specified in advance is included in the peripheral area determined by the peripheral-area determining unit 120. That is, the wall-control-necessity determining unit 131 refers to wall control conditions (explained below) stored in the storing unit 200 in advance and determines whether the determined peripheral area matches the conditions for performing the wall control.

When the peripheral area is within the predetermined distance from the wall surface or the luminaire specified in advance is included in the peripheral area, the wall-control-necessity determining unit 131 determines that the wall control is necessary. When the peripheral area is outside the predetermined distance from the wall surface or the luminaire specified in advance is not included in the peripheral area, the wall-control-necessity determining unit 131 determines that the wall control is unnecessary.

When the wall-control-necessity determining unit 131 determines that the wall control is unnecessary, the wall-control-necessity determining unit 131 transmits an instruction for not performing the wall control to the control executing unit 140. In this case, the wall-control-target determining unit 132 and the wall-control-content determining unit 133 do not perform processing.

When the wall-control-necessity determining unit 131 determines that the wall control is necessary, subsequently, the wall-control-target determining unit 132 determines a luminaire to be a target of the wall control. That is, the wall-control-target determining unit 132 refers to the wall control conditions (explained below) stored in the storing unit 200 in advance and determines a luminaire to be the wall control target stored in association with the peripheral area. Specifically, the wall-control-target determining unit 132 determines a luminaire arranged along the wall surface between the peripheral area and the wall surface as the wall control target. If the wall control is executed because the luminaire specified in advance is included in the peripheral area, the luminaire is specified in advance as the wall control target and stored in the storing unit 200.

The wall-control-content determining unit 133 specifies content of the wall control referring to the storing unit 200. For example, the wall-control-content determining unit 133 determines processing content such as processing for increasing a dimming degree of the wall control target luminaire by 10%.

The control executing unit 140 receives information concerning the necessity of the wall control, the luminaire to be the wall control target, and the content of the wall control from the wall control unit 130. The control executing unit 140 executes the wall control with the determined content on the wall control target luminaire. The control executing unit 140 controls the luminaires in the center area and the peripheral area determined by the center-area determining unit 110 and the peripheral-area determining unit 120 on the basis of gradation control conditions (explained below) set in advance.

### Information stored in the storing unit 200

Information stored in the storing unit 200 is explained. The storing unit 200 includes a gradation-control-condition storing unit 210 and a wall-control-condition storing unit 220.

The gradation-control-condition storing unit 210 stores luminaires included in the center area and the peripheral area to be targets if the gradation control is executed and control content, that is, dimming degrees and the like of the luminaires in association with each other.

The wall-control-condition storing unit 220 stores, as conditions for executing the wall control, the peripheral area including luminaires within the predetermined distance from the wall surface, a luminaire to be a wall control target corresponding to the peripheral area, and content (a dimming degree, etc.) of the wall control in association with one another.

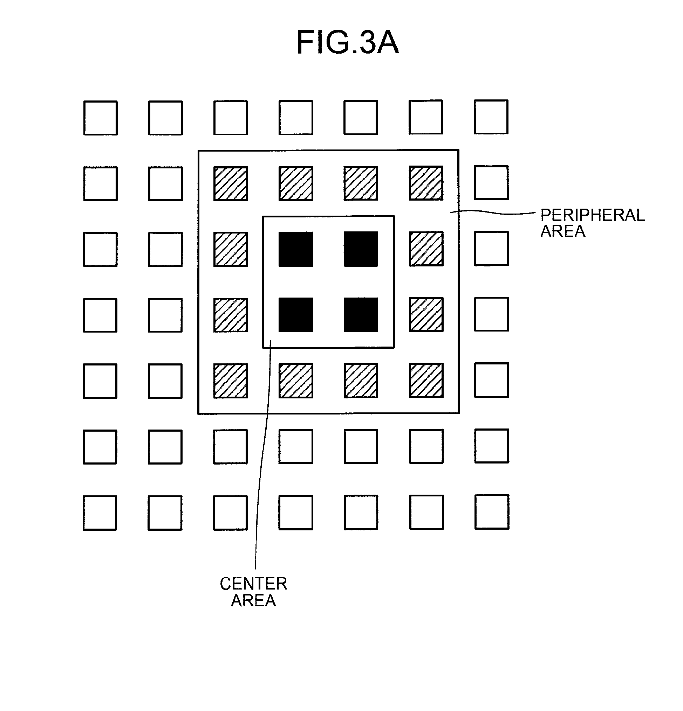

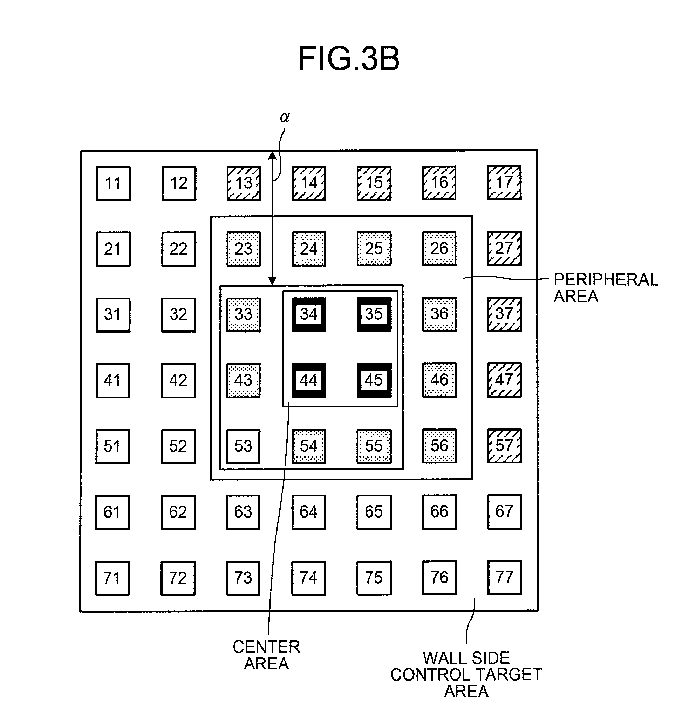

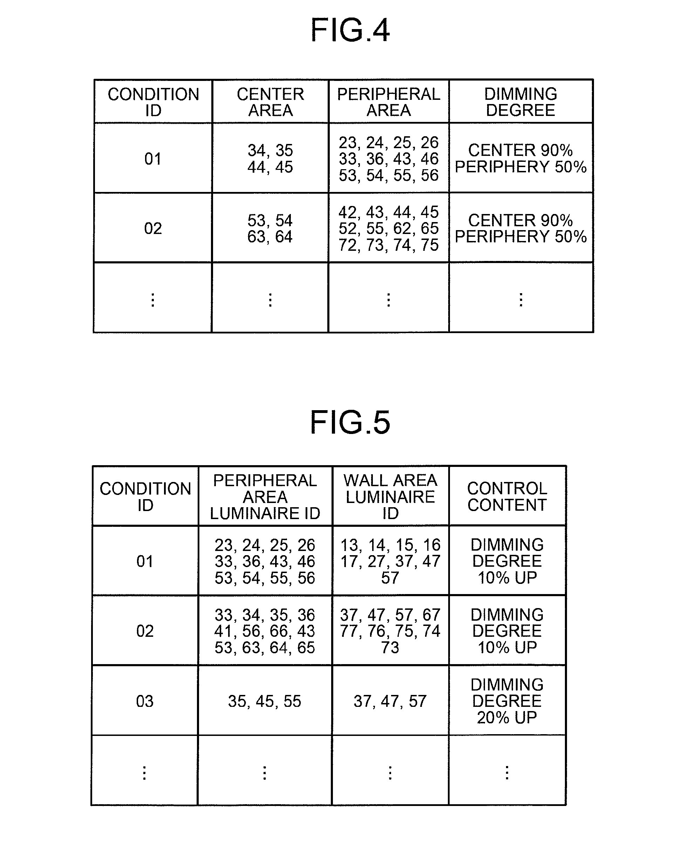

The information stored in the gradation-control-condition storing unit 210 and the wall-control-condition storing unit 220 is further explained with reference to FIGS. 3A to 5. FIG. 3A is a diagram for explaining a relation between the center area and the peripheral area. FIG. 3B is a diagram for explaining a relation among the center area, the peripheral area, and a wall area. FIG. 4 is a diagram showing an example of the configuration of information stored in the gradation-control-condition storing unit 210 according to the first embodiment. FIG. 5 is a diagram showing an example of the configuration of information stored in the wall-control-condition storing unit 220 according to the first embodiment.

First, as shown in FIG. 3A, it is assumed that forty-nine luminaires in total (7x7) are arranged on a ceiling surface. For example, in this embodiment, it is assumed that luminaires indicated by four black squares are specified as the center area. Then, if the gradation control is performed, twelve luminaires indicated by hatching located around the four luminaires are the peripheral area.

IDs are respectively given to the forty-nine luminaires as peculiar addresses. In an example shown in FIG. 3A, lighting IDs "11" to "17" are respectively given to a luminaire in the first row and the first column to a luminaire in the first row and the seventh column. Lighting IDs "21" to "27" are respectively given to a luminaire in the second row and the first column to a luminaire in the second row and the seventh column (see FIG. 3B). The IDs of the luminaires are stored in the storing unit 200 (not shown in the figure).

An example in which the wall control is applied to the luminaires arranged as explained above is shown in FIG. 3B. In the example shown in FIG. 3B, luminaires specified by lighting IDs "34, 35, 44, and 45" are located in the center area. Luminaires specified by the lighting IDs "23, 24, 25, 26, 33, 36, 43, 46, 53, 54, 55, and 56" are located in the peripheral area. In this case, it is assumed that the wall control is performed if the peripheral area is located within a distance α from the wall surface. Then, the luminaires specified by the lighting IDs "23, 24, 25, 26, 36, 46, and 56" are located within the distance α from the wall surface. Therefore, the wall control is applied to the luminaires specified by the lighting IDs "23, 24, 25, 26, 36, 46, and 56". In this example, lighting IDs of luminaires arranged along the wall surface between the peripheral area and the wall surface are "13, 14, 15, 16, 17, 27, 37, 47, and 57". Therefore, the wall control for increasing a dimming degree of the luminaires specified by the lighting IDs "13, 14, 15, 16, 17, 27, 37, 47, and 57" is performed. In the example shown in FIG. 3B, the control is performed to reduce a dimming degree of the luminaires in the peripheral area and increase a dimming degree of the luminaires arranged along the wall surface. In the wall control, when the dimming degree of the luminaires on the wall surface is increased compared with a dimming degree during the normal gradation control, the control for reducing the dimming degree of the luminaires in the peripheral area in this way may be simultaneously performed.

In order to execute the gradation control and the wall control explained above, gradation control conditions and wall control conditions that specify conditions for performing the controls are stored in the storing unit 200 in advance.

The gradation-control-condition storing unit 210 stores, for example, gradation control conditions shown in FIG. 4. As shown in FIG. 4, the gradation-control-condition storing unit 210 stores the center area and the peripheral area to be targets of the gradation control and dimming degrees applied to the center area and the peripheral area in association with condition IDs. For example, the gradation control condition with a condition ID "01" is applied if the center area includes the luminaires specified by the lighting IDs "34, 35, 44, and 45". In this case, the peripheral area includes the luminaires specified by the lighting IDs "23, 24, 25, 26, 33, 36, 43, 46, 53, 54, 55, and 56". The luminaires in the center area are controlled to a dimming degree of 90% and the luminaires in the peripheral area are controlled to a dimming degree of 50%.

The wall-control-condition storing unit 220 stores, for example, wall control conditions shown in FIG. 5. As shown in FIG. 5, the wall-control-condition storing unit 220 stores lighting IDs of the luminaires included in the peripheral area (peripheral area luminaire IDs), lighting IDs of the luminaires to be targets of the wall control (wall area luminaire IDs), and control content in association with condition IDs. For example, a wall control condition with a condition ID "01" is applied if the peripheral area luminaire IDs are "23, 24, 25, 26, 33, 36, 43, 46, 53, 54, 55, and 56". In this case, the lighting IDs "13, 14, 15, 16, 17, 27, 37, 47, and 57" are specified as the wall area luminaire IDs. "Dimming degree 10% UP" is specified as the content of the wall control.

The wall-control-condition storing unit 220 stores the peripheral area luminaire IDs "35, 45, and 55", the wall area luminaire IDs "37, 47, and 57", and control content "dimming degree 20% UP" in association with a condition ID "03". That is, if the luminaires specified by the lighting IDs "35, 45, and 55" are included in the luminaires determined as the peripheral area, the wall control for increasing a dimming degree of the luminaires specified by the lighting IDs "37, 47, and 57" by 20% is performed. Such conditioning is suitable for, for example, if a desk or the like is arranged under the luminaires specified by the lighting IDs "35, 45, and 55" and it is known that, when a person takes a seat, the person turns to the direction of the luminaires specified by the lighting IDs "37, 47, and 57".

### Flow of lighting control processing in the first embodiment

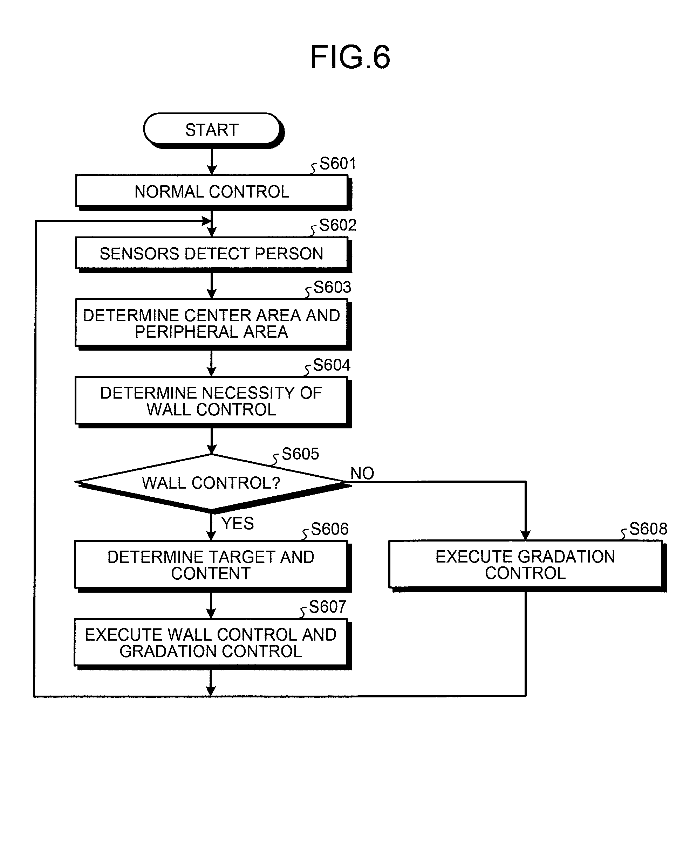

FIG. 6 is a flowchart for explaining an example of a flow of lighting control processing according to the first embodiment. As shown in FIG. 6, when the wall switch 40 is turned on, first, the control device 10 starts normal control not including the gradation control (S601). That is, the luminaires are lit at a dimming degree set in default. Subsequently, the sensors 30A, 30B, and 30C detect a person (S602). Information concerning the detected person is transmitted to the control device 10. In the control device 10, the center-area determining unit 110 and the peripheral-area determining unit 120 determine the center area and the peripheral area on the basis of the received information concerning the person (S603). The wall control unit 130 determines necessity of the wall control on the basis of information concerning the determined peripheral area (S604). If the wall control unit 130 determines that the wall control is not performed (No in S605), the wall control unit 130 transmits an indication to that effect to the control executing unit 140. The control executing unit 140 refers to the information stored in the storing unit 200 and executes the gradation control not including the wall control (S608).

On the other hand, if the wall control unit 130 determines that the wall control is performed (Yes in S605), the wall control unit 130 subsequently refers to the storing unit 200 and determines a target and control content of the wall control (S606). The wall control unit 130 executes the gradation control including the wall control with the determined content on the determined target (S607).

If control for, for example, changing a dimming degree and a lighting color of the luminaires in the peripheral area and the center area is performed as a part of the wall control explained above, the wall control unit 130 also stores control content applied to the peripheral area and the center area in the wall-control-condition storing unit 220 and executes lighting control on the basis of the stored content.

For example, as a part of the wall control, it is possible to perform lighting control for, for example, not lighting the luminaires in the peripheral area or lighting the luminaires at a dimming degree lower than a dimming degree during the normal gradation control. Consequently, it is possible to improve brightness felt by the user without substantially increasing power consumption compared with the normal gradation control.

### Effects of the first embodiment

As explained above, the lighting control system 1 according to the first embodiment includes the plurality of luminaires 20A, 20B, and 20C and the control device 10. The plurality of luminaires 20A, 20B, and 20C illuminate a predetermined space. The control device 10 executes first control (normal gradation control) for dimming the luminaire arranged in the peripheral area in the periphery of the center area among the plurality of luminaires to be darker than the luminaire arranged in the center area and lighting the luminaires in the center area and the peripheral area. The control device 10 executes second control (the wall control) for controlling the dimming degree, according to predetermined conditions, of the luminaire arranged in the wall area, which is the position for illuminating the wall surface, among the plurality of luminaires to be brighter than during the first control. Therefore, in the first control (the normal gradation control), if brightness felt by a person in a room is insufficient because the brightness of the wall surface is insufficient, luminaires for illuminating the wall surface may be added and lit. Therefore, it is possible to increase the brightness felt by the person and improve comfortableness of lighting.

The lighting control system 1 according to the first embodiment further includes the detecting devices 30A, 30B, and 30C that detect a person in a predetermined space. The control device 10 determines the positions of the center area and the peripheral area according to the position of the person detected by the detecting devices 30A, 30B, and 30C. Therefore, it is possible to execute the gradation control according to the position of the person present in the room.

In the lighting control system 1 according to the first embodiment, the control device 10 executes the second control (the wall control) if a luminaire in the peripheral area is present within a predetermined distance from the wall surface or the luminaire in the peripheral area is a luminaire specified in advance. Therefore, it is possible to realize lighting control effectively using reflected light from the wall surface to, for example, reduce a dimming degree of the luminaire in the peripheral area and light the luminaire in the wall area if the peripheral area is close to the wall surface. It is possible to set the wall control to be executed even if the peripheral area is not within the predetermined distance from the wall surface.

In the lighting control system 1 according to the first embodiment, if the second control (the wall control) is executed, the control device 10 can light the luminaire in the center area at a dimming degree same as the dimming degree during the first control (the normal gradation control) and light the luminaire in the peripheral area at a dimming degree lower than the dimming degree during the first control. Therefore, it is possible to increase the brightness felt by the person using the reflected light from the wall surface and improve comfortableness of lighting without substantially increasing power consumption compared with power consumption during the normal gradation control.

### Second Embodiment

The lighting control system according to the first embodiment executes the wall control according to the distance of the peripheral area from the wall and whether the designated luminaire is included in the peripheral area. A lighting control system according to a second embodiment not only detects the position of a person with a sensor but also detects a direction the person is facing and determines a luminaire to be a target of wall control according to the detected direction.

### Configuration of a lighting control system 2 according to the second embodiment

The configuration of the lighting control system 2 according to the second embodiment is the same as the configuration of the lighting control system 1 according to the first embodiment shown in FIG. 1. The second embodiment is different from the first embodiment in that the sensors 30A, 30B, and 30C detect not only the presence of a person but also the direction of the person and transmit the presence and the direction of the person to a control device 10A. The control device 10A executes the wall control to light or to control the dimming degree of a luminaire that illuminates a wall surface in the forward direction of the person detected by the sensors. Differences from the first embodiment are mainly explained below. Explanation concerning the same functions and the same components is omitted.

### Example of the configuration of the control device 10A

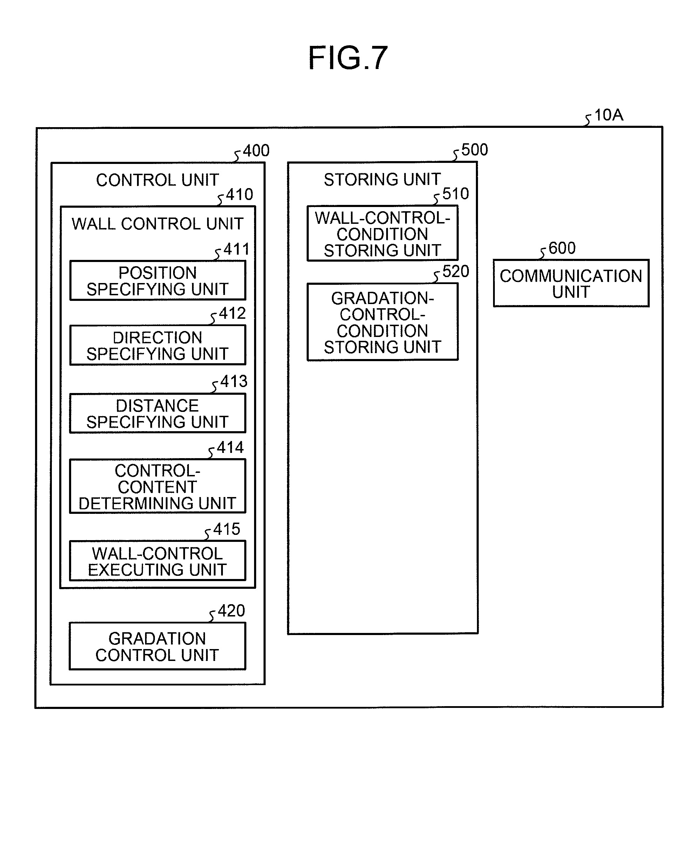

FIG. 7 is a diagram showing an example of the configuration of the control device 10A according to the second embodiment. An example of the configuration of the control device 10A is explained with reference to FIG. 7.

As shown in FIG. 7, the control device 10A includes a control unit 400, a storing unit 500, and a communication unit 600. The control unit 400 controls processing in the control device 10A. The storing unit 500 stores information used for the processing in the control device 10A. The communication unit 600 relays communication between the control device 10A and the luminaires 20A, 20B, and 20C, the sensors 30A, 30B, and 30C, the wall switch 40, the information processing device 50, and the like.

The control unit 400 includes a wall control unit 410 and a gradation control unit 420.

The wall control unit 410 executes processing concerning the wall control. The wall control in the second embodiment refers to control of dimming degree of a luminaire, which illuminates a predetermined range of a wall present in the front in a visual line direction of a person, to be brighter than during the normal gradation control. The wall in the front in the visual line direction is illuminated in this way to increase brightness felt by the person and improve comfortableness of lighting.

The wall control unit 410 includes a position specifying unit 411, a direction specifying unit 412, a distance specifying unit 413, a control-content determining unit 414, and a wall-control executing unit 415.

The position specifying unit 411 receives information concerning a person detected by the sensors 30A, 30B, and 30C via the communication unit 600 and specifies the position of the person.

The direction specifying unit 412 receives the information concerning the person detected by the sensors 30A, 30B, and 30C via the communication unit 600 and specifies the front in a visual line direction of the person.

The distance specifying unit 413 specifies the distance between the person and a wall surface in the front in the visual line direction on the basis of the position and the front in the visual line direction specified by the position specifying unit 411 and the direction specifying unit 412.

The control-content determining unit 414 determines content of the wall control on the basis of the position specified by the position specifying unit 411, the front in the visual line direction specified by the direction specifying unit 412, and the distance specified by the, distance specifying unit 413. Specifically, the control-content determining unit 414 refers to wall control conditions stored in a wall-control-condition storing unit 510 in advance and determines control content.

The wall-control executing unit 415 executes control of a luminaire to be a target of the wall control on the basis of the control content determined by the control-content determining unit 414.

The gradation control unit 420 executes gradation control. The gradation control in the second embodiment is the same as the gradation control in the first embodiment. The gradation control unit 420 executes processing same as the processing by the center-area determining unit 110, the peripheral-area determining unit 120, and the control executing unit 140 shown in FIG. 2. Specifically, the gradation control unit 420 determines a center area and a peripheral area on the basis of information received from the sensors 30A, 30B, and 30C and executes the gradation control on the basis of information stored in a gradation-control-condition storing unit 520.

### Example of information stored in the storing unit 500

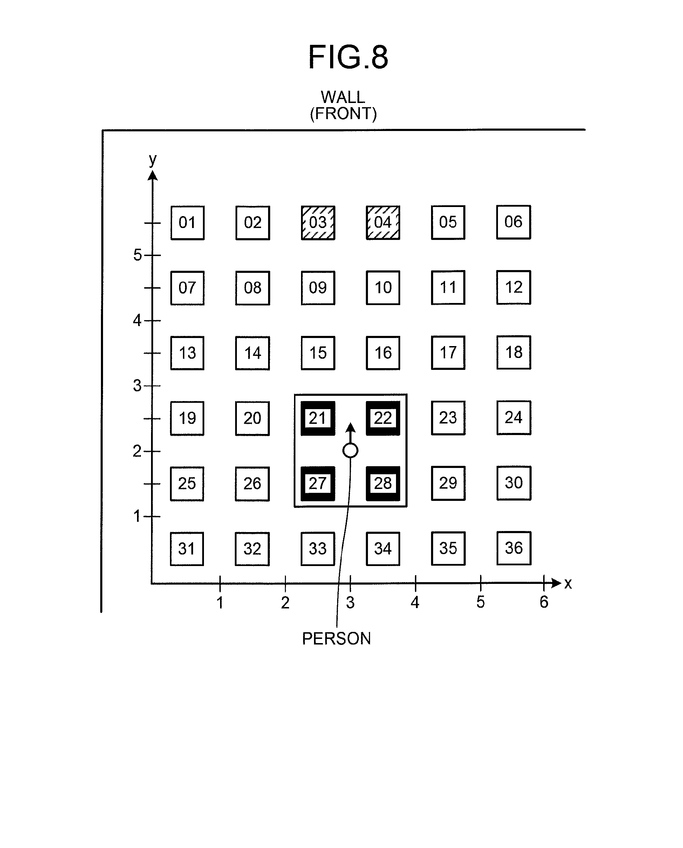

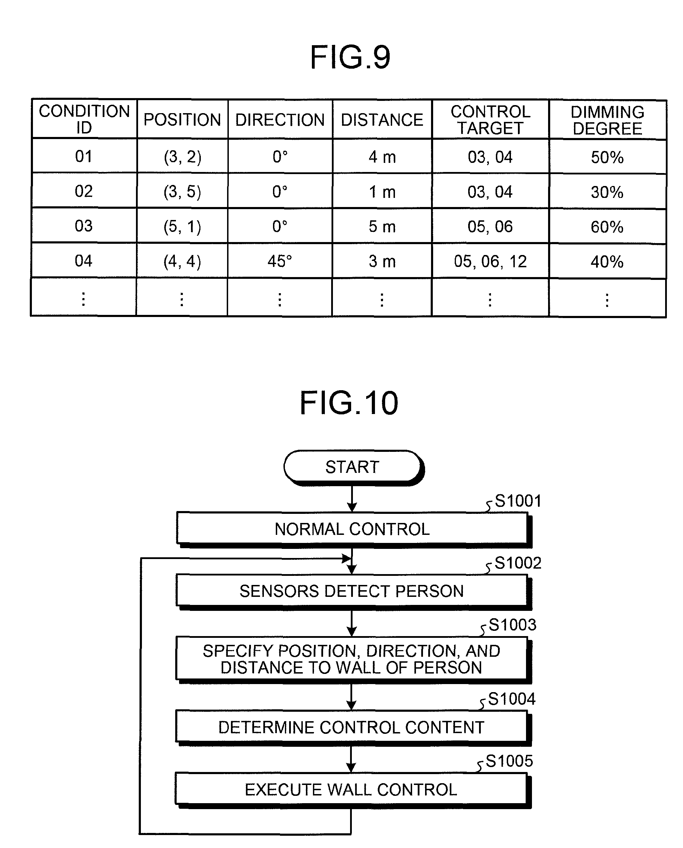

An example of information stored in the storing unit 500 is explained with reference to FIGS. 8 and 9. FIG. 8 is a diagram for explaining the wall control in the second embodiment. FIG. 9 is a diagram showing an example of the configuration of information stored in the wall-control-condition storing unit 510 according to the second embodiment.

First, the wall control in the second embodiment is further explained with reference to FIG. 8. FIG. 8 shows thirty-five luminaires arranged on a ceiling. Lighting IDs "01" to "35" are allocated to the luminaires.

In an example shown in FIG. 8, a person is detected in the center of luminaires specified by lighting IDs "21, 22, 27, and 28". The front in the visual line direction is the upward direction of FIG. 8. For example, if the normal gradation control in the first embodiment is executed, the luminaires specified by the lighting IDs "21, 22, 27, and 28" are the center area and luminaires specified by lighting IDs "14, 15, 16, 17, 20, 23, 26, 29, 31, 32, 33, and 34" are the peripheral area. In gradation control for lighting only the center area and the peripheral area, the other luminaires are not lit.

If luminaires that illuminate the wall in the front in the visual line direction (luminaires specified by the lighting IDs "03 and 04") are lit, brightness in the visual field of the person increases and comfortableness by lighting is improved. Therefore, in the second embodiment, the luminaires specified by the lighting IDs "03 and 04" are also lit to increase the brightness felt by the person. Control for lighting the luminaires that illuminate the wall surface located in the front in the visual line direction of the person or increasing a dimming degree of the luminaires is the wall control in the second embodiment.

The storing unit 500 includes the wall-control-condition storing unit 510 and the gradation-control-condition storing unit 520. The gradation-control-condition storing unit 520 is the same as the gradation-control-condition storing unit 210 in the first embodiment and stores information same as the information shown in FIG. 4.

The wall-control-condition storing unit 510 stores conditions of the wall control according to the second embodiment and stores, for example, information shown in FIG. 9. In an example shown in FIG. 9, a position of a person ("position"), a visual line direction of the person ("direction"), and a distance between the person and a wall surface ("distance") are stored in association with a condition ID. Further, a lighting ID of a luminaire to be a control target ("control target") and a dimming degree attained by the luminaire in the wall control ("dimming degree") are stored in association with the condition ID.

For example, in FIG. 9, control conditions that the position of the detected person is "(3, 2)", the direction is "0°", and the distance is "4 m" are stored in association with a condition ID "01". In this example, the position of the person is represented by a coordinate (x, y) shown in FIG. 8. That is, the position of the person shown in FIG. 8 is a coordinate (3, 2). In the example shown in FIG. 9, the visual line direction of the person is represented by a clockwise angle with 0° set in the upward direction in FIG. 8. The visual line direction of the person in FIG. 8 is "0°". In the example shown in FIG. 9, assuming that a space allocated to each of the luminaires shown in FIG. 8 is about 1m×1m, the distance from the person to the wall surface is represented. The distance between the person and the wall surface in the front in the visual line direction in FIG. 8 is "4 m".

That is, the condition ID "01" shown in FIG. 9 specifies a wall control condition applied when the person in the position and the visual line direction shown in FIG. 8 is detected. As shown in FIG. 9, the condition ID "01" is further associated with control targets "03 and 04" and a dimming degree "50%". That is, FIG. 8 indicates that the luminaires specified by the lighting IDs "03 and 04" are lit at the dimming degree of 50%.

Control conditions with a condition ID "02" are conditions that the person is present in (3, 5), that is, among luminaires specified by lighting IDs "03, 04, 09, and 10" and looks at the direction "0°", that is, the upward direction. In this case, the distance between the person and the wall surface in the front in the visual line direction is 1 m. If the distance between the person and the wall in the front of the visual line direction is small, a sense of the person feeling bright even if the brightness of the wall is low is considered to be the same as a sense felt by the person if the brightness of the wall is high and the distance to the wall is large. Therefore, the luminaires that illuminate the wall surface are lit with a dimming degree reduced compared with a dimming degree set if the distance to the wall surface is large. That is, the luminaires specified by the lighting IDs "03 and 04" are lit at a dimming degree of 30%.

The dimming degree of the luminaires that illuminate the wall surface is adjusted according to the distance between the person and the wall surface as explained above. Consequently, it is possible to maintain brightness felt by the person at a desired level irrespective of the distance between the person and the wall surface.

The user can set control conditions as appropriate according to the arrangement of office supplies, partitions, machines, and the like arranged in a room.

### Flow of lighting control processing according to the second embodiment

FIG. 10 is a flowchart for explaining an example of a flow of lighting control processing according to the second embodiment. The example of the flow of the lighting control processing according to the second embodiment is explained with reference to FIG. 10.

First, when a person turns on the wall switch 40, normal control set in advance is started (S1001). The sensors 30A, 30B, and 30C detect the person (S1002). A detection result of the sensors 30A, 30B, and 30C is transmitted to the control device 10A. In the control device 10A, the position specifying unit 411, the direction specifying unit 412, and the distance specifying unit 413 specify the position of the person, the front in the visual direction of the person, and the distance between the person and the wall surface in the front of the visual line direction on the basis of the received information (S1003). The control-content determining unit 414 determines control content referring to the wall-control-condition storing unit 510 on the basis of the specified position, direction, and distance (S1004). The wall-control executing unit 415 executes the wall control on the basis of the determined control content (S1005). Thereafter, the processing returns to S1002.

### Effects of the second embodiment

As explained above, in the lighting control system 2 according to the second embodiment, the detecting devices (the sensors 30A, 30B, and 30C) further detect the direction of the person in the predetermined space. The control device 10A executes the second control (the wall control) for controlling the dimming degree of the luminaire in the wall area in the front direction of the person detected by the detecting devices to be brighter than during the first control among the plurality of luminaries (during the normal gradation control). Therefore, the dimming degree of the luminaire is controlled such that the area in the visual field of the person is brightened. Thus, the brightness felt by the person can be increased. Consequently, it is possible to improve comfortableness given to the person by lighting.

In the lighting control system 2 according to the second embodiment, the control device 10A controls the dimming degree of the luminaire present in the wall area to brightness corresponding to the distance between the person and the wall surface. Therefore, it is possible to control the brightness of the wall surface to be high if the person is far from the wall surface and control the brightness of the wall surface to be low if the person is near the wall surface and prevent unnecessary power consumption while maintaining brightness felt by the person.

### Third Embodiment

In the first and second embodiments, when the gradation control is executed, the luminaire that does not directly illuminate a place where the person is present is also lit and its dimming degree is controlled according to the wall control to improve comfortableness of lighting. The gradation control is control for setting dimming degrees of not only the luminaire in a portion where the person is present but also the luminaire around the portion to be low and lighting the luminaires. Therefore, power consumption tends to be larger than power consumption in the normal control (the control not involving the gradation control). If the wall control is also executed in the gradation control, it is likely that power consumption increases more than power consumption in the normal gradation control. In both cases, it is difficult for the user to grasp the power consumption. Therefore, in a third embodiment, a lighting control system is configured to estimate power consumption with a simulation according to a form of lighting control and to be capable of presenting the power consumption to a user together with an index of comfortableness, a lighting effect, and the like by the lighting control.

### Configuration of a lighting control system 3 according to the third embodiment

The configuration of the lighting control system 3 according to the third embodiment is the same as the configuration of the lighting control system 1 according to the first embodiment shown in FIG. 1. The third embodiment is different from the first and second embodiments in that a control device 10B calculates power consumption according to a plurality of control patterns and transmits the power consumption in a format that can be displayed on a display unit of the information processing device 50. In the following explanation, differences from the first and second embodiments are mainly explained. Explanation concerning the same functions and the same components is omitted.

### Example of the configuration of the control device 10B

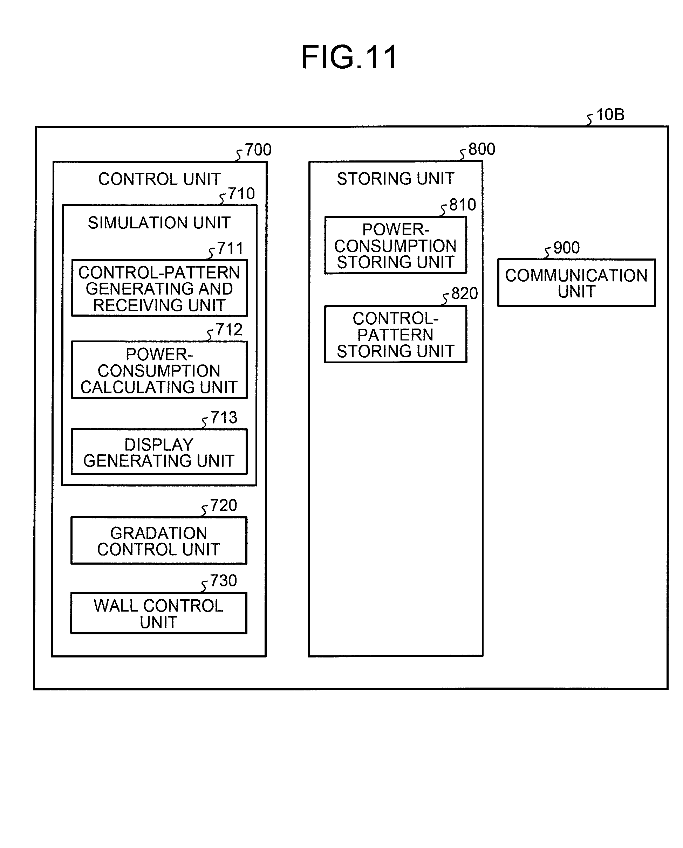

FIG. 11 is a diagram showing an example of the configuration of the control device 10B according to the third embodiment. The example of the configuration of the control device 10B is explained with reference to FIG. 11.

As shown in FIG. 11, the control device 10B includes a control unit 700, a storing unit 800, and a communication unit 900. The control unit 700 controls processing in the control device 10B. The storing unit 800 stores information used for processing in the control device 10B. The communication unit 900 relays communication between the control device 10B and the luminaires 20A, 20B, and 20C, the sensors 30A, 30B, and 30C, the wall switch 40, the information processing device 50, and the like.

The control unit 700 includes a simulation unit 710, a gradation control unit 720, and a wall control unit 730. The simulation unit 710 calculates power consumption with simulations corresponding to a plurality of control patterns and generates information for presenting the control patterns and the power consumption on a display screen of the information processing device 50 in association with each other.

The gradation control unit 720 and the wall control unit 730 execute functions and processing same as the functions and the processing of the gradation control unit 420 and the wall control unit 410 according to the second embodiment.

The simulation unit 710 includes a control-pattern generating and receiving unit 711, a power-consumption calculating unit 712, and a display generating unit 713.

The control-pattern generating and receiving unit 711 receives a control pattern input by a user from the information processing device 50 and stores the control pattern in the storing unit 800. When control conditions are stored in the storing unit 800 in advance, the control-pattern generating and receiving unit 711 may generate a control pattern corresponding to the control conditions and store the control pattern in the storing unit 800. For example, when a functional unit equivalent to the gradation-control-condition storing unit 520 in the second embodiment is present in the storing unit 800, the control-pattern generating and receiving unit 711 may generate a control pattern corresponding to the stored control content and store the control pattern in the storing unit 800.

The power-consumption calculating unit 712 simulates and calculates power consumption consumed when the control pattern stored in the storing unit 800 by the control-pattern generating and receiving unit 711 is executed. For example, information concerning electric power per unit time consumed by the luminaires is stored in the storing unit 800 in advance. The power-consumption calculating unit 712 calculates power consumption of control patterns on the basis of information concerning the luminaires used in the control patterns and the information concerning the electric power.

The display generating unit 713 generates information for presenting a plurality of control patterns and power consumption of the control patterns to the information processing device 50 in association with each other. In this case, the display generating unit 713 is enabled to present the control patterns and the power consumption together with, for example, an arrangement diagram of the luminaires such that the user can easily recognize the control patterns. The display generating unit 713 may also display lighting effects attained by the control patterns. For example, the display generating unit 713 may display control patterns such as "relaxation", "wakening", and "concentration" and lighting effects of the control patterns in association with each other such that the control patterns and the lighting effects can be confirmed. The display generating unit 713 may display, for example, an index representing comfortableness of lighting.

The storing unit 800 includes a power-consumption storing unit 810 and a control-pattern storing unit 820.

The power-consumption storing unit 810 stores lighting IDs of luminaires and power consumption per unit time of the luminaires in association with each other. Here, it is assumed that the power consumption of the luminaires during the dimming control can be estimated by simply multiplying the power consumption per unit time with a dimming degree (%).

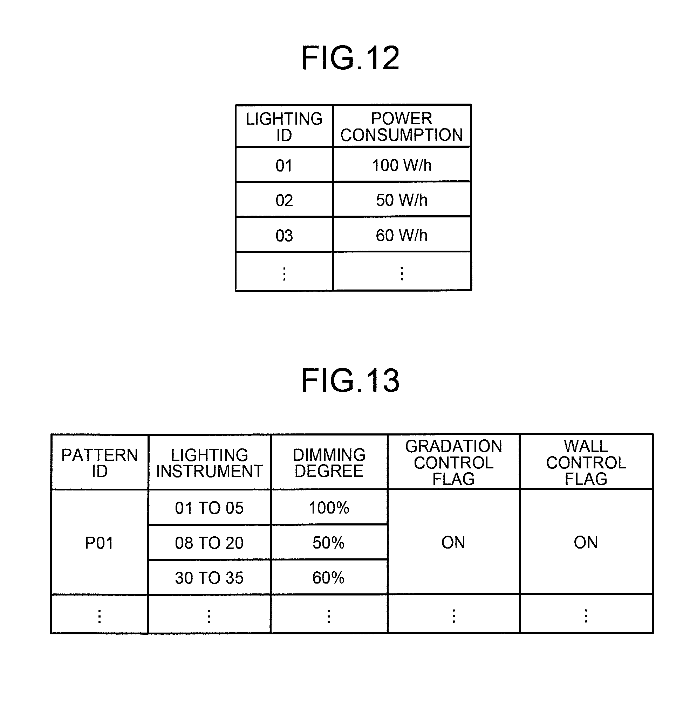

FIG. 12 is a diagram showing an example of the configuration of information stored in the power-consumption storing unit 810 according to the third embodiment. As shown in FIG. 12, for example, power consumption "100W/h" of a luminaire is stored in association with a lighting ID "01" for specifying the luminaire.

The control-pattern storing unit 820 stores a control pattern of a luminaire. For example, the control-pattern storing unit 820 stores a lighting ID and a dimming degree of the luminaire lit by the control pattern in association with a pattern ID. In the case of a control pattern for realizing the gradation control and the wall control, flags indicating the gradation control and the wall control may be added.

FIG. 13 is a diagram showing an example of the configuration of information stored in the control-pattern storing unit 820 according to the third embodiment. As shown in FIG. 13, for example, a lighting ID "01-05" for specifying a luminaire to be lit and a dimming degree "100%" of the luminaire are stored in association with a pattern ID "P01". The gradation control flag and the wall control flag are "ON" in association with the pattern ID "P01" to indicate that a control pattern with the pattern ID "P01" is a pattern for performing the gradation control and the wall control.

If the control pattern with the pattern ID "P01" is associated with the first embodiment, the control pattern with the pattern ID "P01" is considered to be a luminaire, the center area of which is "01-05', the peripheral area of which is "08-20", and the wall area of which is "30-35". The pattern ID "P01" is considered to be a pattern for setting a dimming degree of a luminaire in the peripheral area lower than a dimming degree during the normal gradation control and lighting a luminaire in the wall area at a dimming degree higher than a dimming degree in the peripheral area.

### Example of information presented to the information processing device 50

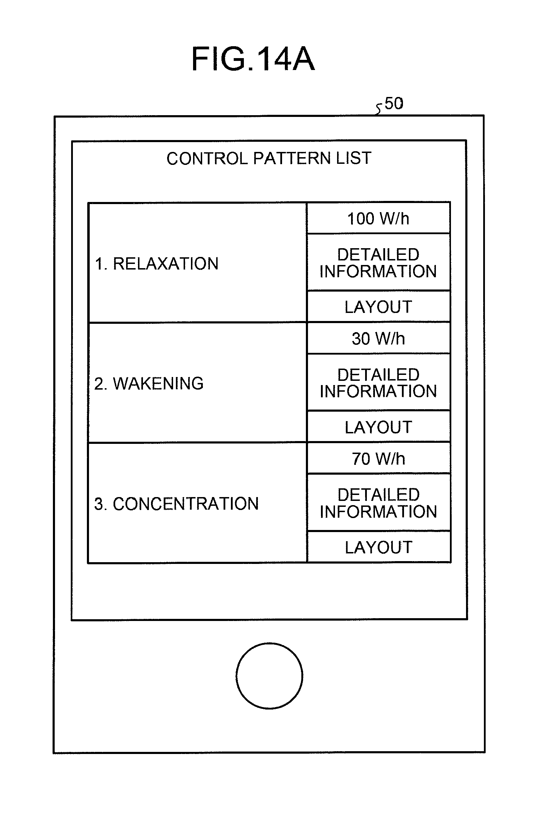

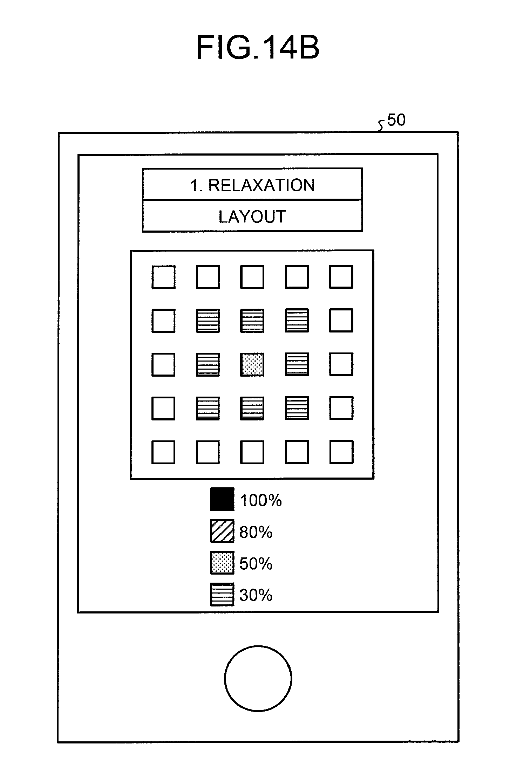

FIG. 14A is a diagram showing an example of information displayed on the information processing device 50 in the lighting control system 3 according to the third embodiment. FIG. 14B is a diagram showing an example of information displayed on the information processing device 50 in the lighting control system 3 according to the third embodiment.

In FIGS. 14A and 14B, as an example, the information processing device 50 is a smart phone. A user connects the information processing device 50 to the control device 10B. A control pattern selection screen may be automatically displayed according to the connection. The user may access a portal site or the like designated in advance and perform setting on the smart phone.

As shown in FIG. 14A, a list of selectable control patterns is displayed on a display screen of the information processing device 50. In the example shown in FIG. 14A, the lighting control system 3 does not particularly display whether the control patterns are the gradation control or the normal control (the control not involving the gradation control) and whether the control patterns involve the wall control. However, the display screen is not limited to this. A screen may be configured to display whether the control patterns are the gradation control.

Even if specific control content is not displayed on the screen shown in FIG. 14A, the user can recognize the arrangement and control content of luminaires by selecting a "layout" button. For example, if the user selects the "layout" button of "relaxation" on the screen shown in FIG. 14A, the screen transitions to the screen shown in FIG. 14B. The screen shown in FIG. 14B displays the arrangement of control target luminaires in the control pattern of "relaxation" and control content, i.e., dimming degrees of the luminaires.

In the display screen shown in FIG. 14B, twenty-five squares shown in a rectangle indicate luminaires. Dimming degrees of the luminaires are indicated by patterns or the like. In FIG. 14B, it is seen that the luminaire in the center is lit at a dimming degree of 50% and the luminaires around the luminaire in the center are lit at a dimming degree of 30%. Besides, if lighting colors are also controlled, the lighting colors may be displayed. If applied control patterns are different according to periods of time, applied periods of time or the like may be also displayed.

As explained above, the user can check a control pattern and power consumption looking at the screen shown in FIG. 14A and check more detailed arrangement and control content of the luminaires looking at the screen shown in FIG. 14B. Therefore, the user can input a new control pattern, cause the control device 10B to simulate power consumption of the control pattern, and compare the control pattern with other control patterns. The user can also select a desired control pattern after easily checking and comparing power consumption of a plurality of applicable control patterns already stored in the control device 10B.

In the third embodiment, a function of simulating power consumption of a control pattern is included in the control device 10B. However, for example, a simulation program for calculating power consumption of a control pattern may be separately distributed to enable information processing devices to execute a simulation.

### Effects of the third embodiment

As explained above, the lighting control system 3 according to the third embodiment further includes the calculating unit (the power-consumption calculating unit 712) configured to calculate power consumption consumed when control is executed on the basis of control patterns for executing the first control (the normal gradation control) and the second control (the wall control) and the display generating unit 713 configured to display the power consumption calculated by the calculating unit and the control pattern in association with each other. Therefore, the lighting control system 3 can present power consumption consumed when control patterns are respectively executed to the user to enable the user to easily check the power consumption. Therefore, even if control in which power consumption tends to be high such as the gradation control is performed, the user can select a preferable control pattern after checking the power consumption. Therefore, the lighting control system 3 can contribute to a reduction in power consumption.

In the lighting control system 3 according to the third embodiment, the display generating unit 713 can further display a lighting effect realized by a control pattern in association with the control pattern. Since the lighting effect attained by the control pattern is also displayed on the display screen in this way, the user can easily grasp lighting effects of respective control patterns and easily select a control form preferable for the user.

### Modification

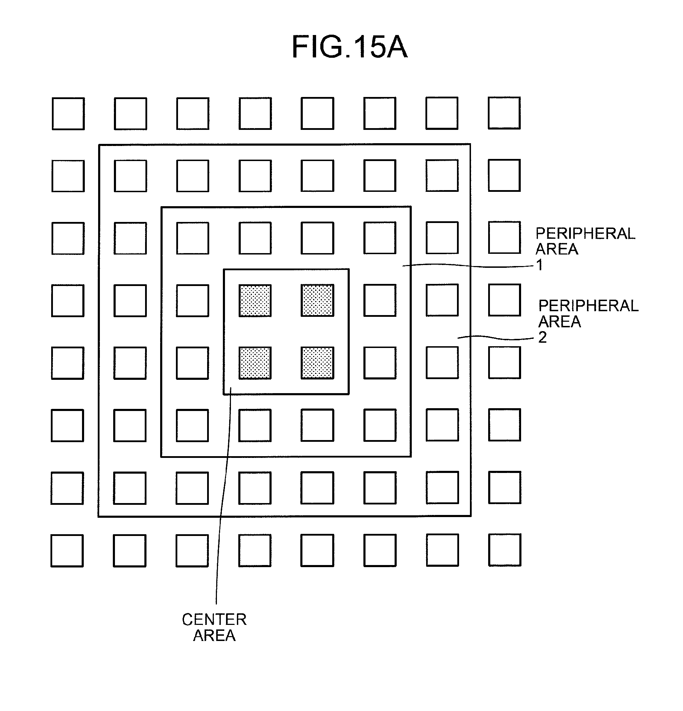

When the gradation control is executed according to the embodiments as explained above, the control can also be executed by changing a dimming degree stepwise. The stepwise gradation control is explained below with reference to FIGS. 15A to 15G. FIGS. 15A to 15G are diagrams for explaining a modification of the gradation control.

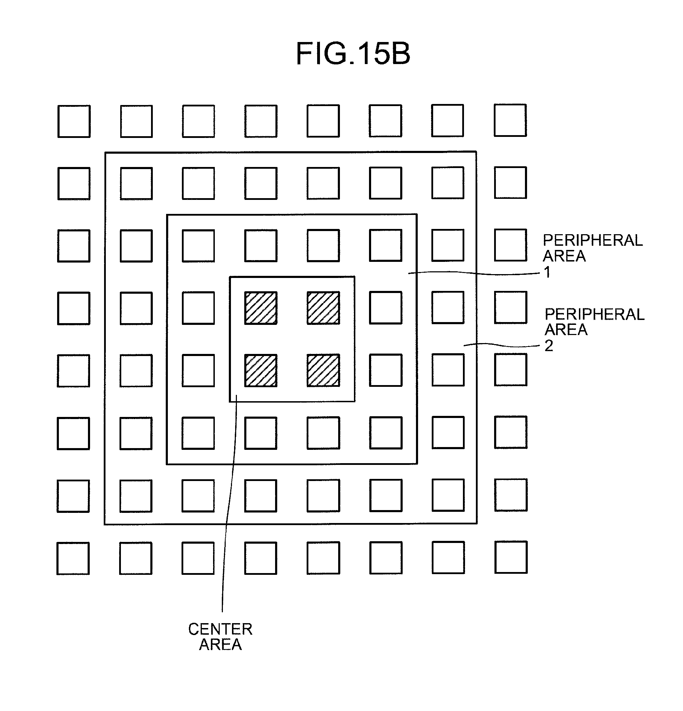

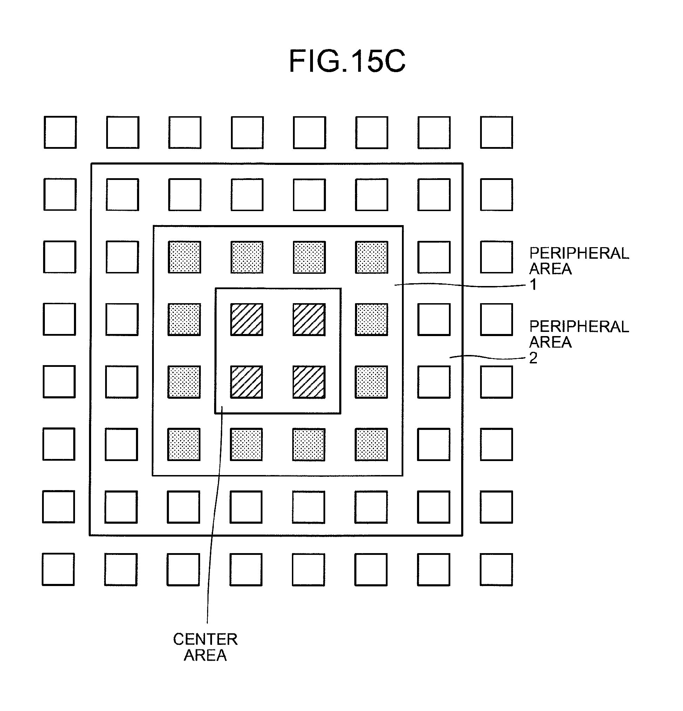

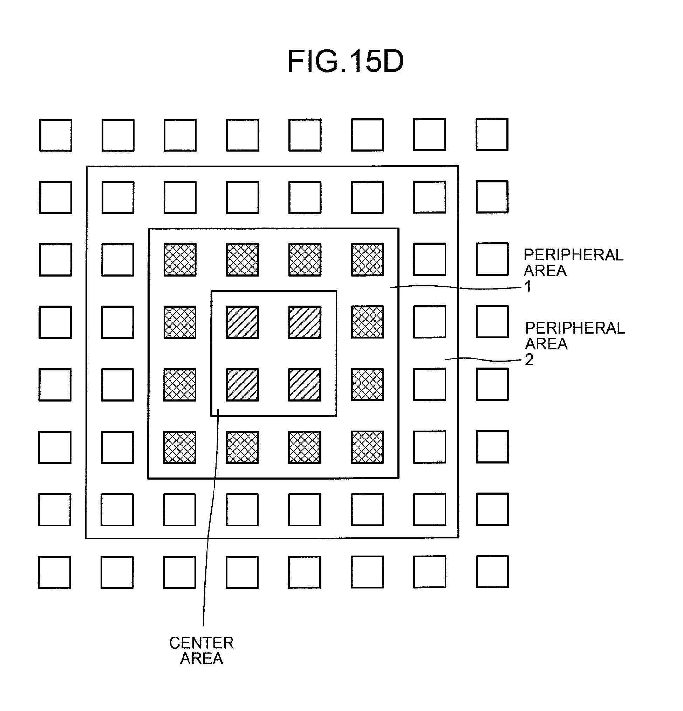

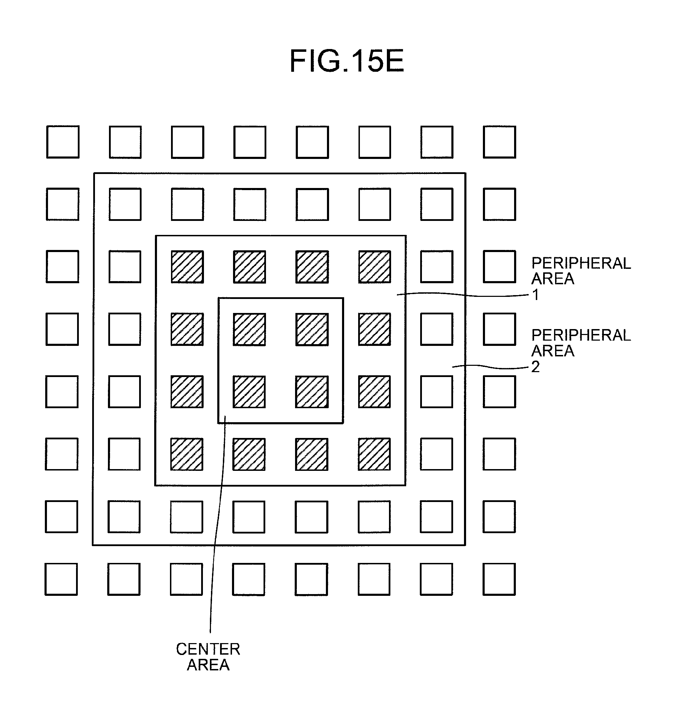

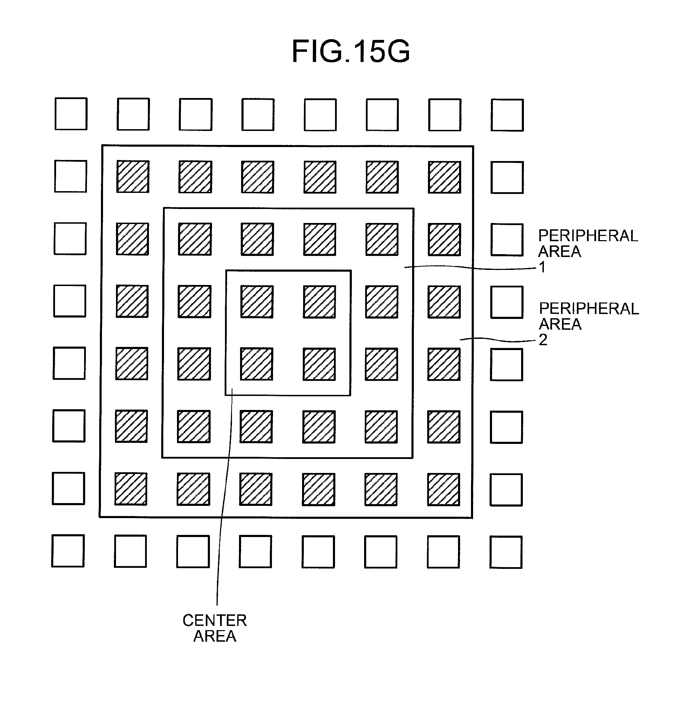

When the gradation control is performed, usually, a dimming degree of the center area is set high and a dimming degree of the peripheral area is set low. In this modification, first, upper limit values and lower limit values of dimming degrees are set for the respective areas. The center area is lit at a rather low dimming degree (FIG. 15A, a center area lower limit value). The dimming degree of the center area is increased stepwise. If the dimming degree of the center area reaches the upper limit value (FIG. 15B, a center area upper limit value), subsequently, a peripheral area 1 located right on the outer side of the center area is lit at a dimming degree lower than the dimming degree of the center area (FIG. 15C, a center area upper limit value and a peripheral area 1 lower limit value). The dimming degree of the peripheral area 1 is increased stepwise (FIG. 15D, the center area upper limit value and between a peripheral area 1 upper limit value and the peripheral area 1 lower limit value). At a point when the dimming degree of the peripheral area 1 reaches the upper limit value (FIG. 15E, the center area upper limit value and the peripheral area 1 upper limit value), subsequently, a peripheral area 2 on the outer side of the peripheral area 1 is lit (FIG. 15E, the center area upper limit value, the peripheral area 1 upper limit value, and a peripheral area 2 lower limit value). The dimming degree of the peripheral area 2 is gradually increased. Finally, all of the center area, the peripheral area 1, and the peripheral area 2 are lit at the respective upper limit values (FIG. 15G, the center area upper limit value, the peripheral area 1 upper limit value, and the peripheral area 2 upper limit value).

In this modification, the upper limit values and the lower limit values of the dimming degrees of the respective areas are set in advance. The dimming degree of one area is changed stepwise and, thereafter, the dimming degree of the area adjacent to the one area is changed stepwise. If the control is performed in this way, it is possible to gradually change the gradation control without the user being excessively aware of a difference in the dimming degrees between the areas. Further, by setting the upper limit values and the lower limit values of the dimming degrees in advance, it is possible to smoothly change the dimming degrees without disordering a relation of gradations.

The lighting control system may be configured to set the upper limit values and the lower limit values of the dimming degrees of the areas in advance to enable the control device or the user to select any one of the patterns shown in FIGS. 15A to 15G. Consequently, it is possible to easily attain a desired dimming degree and execute lighting control.

In the explanation in the first and second embodiments, the wall control and the gradation control are combined. However, the wall control may be realized by being combined with lighting of a plurality of luminaires at fixed brightness separately from the gradation control. For example, the lighting control system may be configured to execute the wall control simultaneously with lighting, at fixed brightness, a luminaire in a position where a person is detected.

As explained above, the lighting control system according to the embodiment can realize comfortable gradation control that takes into account subjective brightness felt by a person in a room.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A lighting control system (1; 2; 3) comprising:
a plurality of luminaires (20A, 20B, 20C) configured to illuminate a predetermined space; and
a control device (10; 10A; 10B) configured to execute first control for controlling a dimming degree of the luminaire arranged in a peripheral area in a periphery of a center area among the plurality of luminaires to be darker than the luminaire arranged in the center area and lighting the luminaires in the center area and the peripheral area and second control for controlling a dimming degree, according to predetermined conditions, of the luminaire arranged in a wall area, which is a position for illuminating a wall surface, among the plurality of luminaires to be brighter than during the first control.

2. The system (1; 2; 3) according to claim 1, further comprising a detecting device (30A, 30B, 30C) configured to detect a person in the predetermined space, wherein
the control device (10; 10A; 10B) determines positions of the center area and the peripheral area according to a position of the person detected by the detecting device (30A, 30B, 30C).

3. The system (1) according to claim 1 or 2, wherein the control device (10) executes the second control when the luminaire in the peripheral area is within a predetermined distance from the wall surface or when the luminaire in the peripheral area is the luminaire specified in advance.

4. The system (1; 2; 3) according to any one of claims 1 to 3, wherein, when the second control is executed, the control device (10; 10A; 10B) lights the luminaire in the center area at a dimming degree same as the dimming degree during the first control and lights the luminaire in the peripheral area at a dimming degree lower than the dimming degree during the first control.

5. The system (2) according to claim 2, wherein
the detecting device (30A; 30B; 30C) further detects a direction of the person in the predetermined space, and
the control device (10A) executes the second control for controlling a dimming degree of the luminaire in the wall area present in a forward direction of the person detected by the detecting device among the plurality of luminaires to be brighter than during the first control.

6. The system (2) according to claim 5, wherein
the control device (10A) dims the luminaire arranged in the wall area to brightness corresponding to a distance between the person and the wall surface.

7. The system (3) according to any one of claims 1 to 6, further comprising:
a calculating unit (712) configured to calculate power consumption consumed when control is executed on the basis of a control pattern for executing the first control and the second control; and
a display generating unit (713) configured to display the power consumption calculated by the calculating unit and the control pattern in association with each other.

8. The system (3) according to claim 7, wherein the display generating unit (713) further displays a lighting effect realized by the control pattern in association with the control pattern.
